# EUROPEAN PATENT APPLICATION

(11) **EP 2 846 528 A1**
(43) Date of publication of application: **11.03.2015**
(21) Application number: 12875995.8
(22) Date of filing: 27.07.2012
(51) Int. Cl.: H04M 11/04

(54) **MOBILE TERMINAL AND ANTI-STOLEN METHOD THEREOF**

(30) Priority: 04.05.2012 CN 201210137420
(71) Applicant: ZTE Corporation, Shenzhen, Guangdong 518057 (CN)
(72) Inventor: FU, Liqin, Shenzhen Guangdong 518057 (CN); YUAN, Lei, Shenzhen Guangdong 518057 (CN); LI, Kefei, Shenzhen Guangdong 518057 (CN); LI, Qiuzhu, Shenzhen Guangdong 518057 (CN); SHUANG, Jianping, Shenzhen Guangdong 518057 (CN); LIU, Xing, Shenzhen Guangdong 518057 (CN)
(74) Representative: Gevers Patents
(86) International application number: PCT/CN2012/079282
(87) International publication number: WO 2013/163849

(57) **Abstract**

A mobile terminal and an anti-theft method thereof are described. The anti-theft recognition module of the mobile terminal sends a security number acquisition instruction to a security number acquisition module after determining that the mobile terminal enters an anti-theft mode, the security number acquisition module automatically acquires a security number according to the security number acquisition instruction and sends the acquired security number to an anti-theft processing module, the anti-theft processing module gives an alarm according to the received security number to help the owner of the mobile terminal retrieve the mobile terminal or the information stored in the mobile terminal, thereby minimizing the loss of the owner of the mobile terminal and eliminating the potential safety hazard brought by the loss of the personal information stored in the mobile terminal. Moreover, the security number acquisition module automatically starts up to automatically acquire a security number after the anti-theft recognition module determines that the mobile terminal enters an anti-theft mode, thus avoiding the situation that no alarm is given after the mobile terminal is lost as the owner forgets to set an alarming function or makes an error in setting the alarming function and the situation that the giving of an alarm is failed as a manually set fixed number is out of service because of an overdue bill or not used any more.

## Description

### TECHNICAL FIELD

The disclosure relates to the field of communications and more particularly to a mobile terminal and an anti-theft method thereof.

### BACKGROUND

More and more mobile terminals have come into our life, providing many convenient services and improving the quality of our life. However, such mobile terminals also record user information while providing services, thus, if a mobile terminal is lost, then the user information stored in the mobile terminal may become a huge potential safety hazard to the user, and below is detailed description of this situation based on an example of a mobile phone.

As a small fashionable communication tool, a mobile phone can be carried around but is lost easily. At present, those who lose their mobile phones can do nothing to initiatively get the mobile phone back but take the fact. As mobile terminals become more and more intelligent and complicated and mobile phones are provided with more and more functions which are being increasingly improved, mobile phones are functionally closer and closer to computers to store an increasing amount of personal information, thus becoming more and more important. Moreover, most of mobile phones are compatible with various phone cards and memory cards in which a large amount of personal information is stored. But most of mobile phones lack an anti-theft and recovery function. The person who finds a lost mobile phone can use the mobile phone normally and browsers and uses all the personal information of the owner of the mobile phone, thus causing a great potential safety hazard to the owner of the mobile phone.

### SUMMARY

The main object of the disclosure is to provide a mobile terminal and an anti-theft method thereof, capable of giving an alarm automatically under the triggering of a simple alarming operation after the mobile terminal is lost, so as to effectively help the user recover the lost terminal or the information stored in the lost terminal, thus reducing the loss of the user.

To this end, the technical solutions of the disclosure are implemented as follows.

An anti-theft method for a mobile terminal includes that:
an anti-theft recognition module determines whether or not the mobile terminal enters an anti-theft mode, if so, sends a security number acquisition instruction to a security number acquisition module;
after receiving the security number acquisition instruction, the security number acquisition module automatically acquires a security number and sends the acquired security number to an anti-theft processing module; and
after receiving the security number, the anti-theft processing module gives an alarm according to the security number.

The security number acquisition module may automatically acquire a security number in the following way: the security number acquisition module acquires at least one security number from at least one of a name card holder, call logs and a service record of the mobile terminal.

The security number acquisition module may automatically acquire a security number in the following way: the security number acquisition module acquires one security number from at least one of the name card holder, the call logs and the service record of the mobile terminal.

The security number acquisition module may acquire a security number from the name card holder in at least one of the following ways:
the security number acquisition module randomly selects, from the name card holder, a number recorded on a name card as a security number;
the security number acquisition module selects, from all the name cards included in the name card holder, a number recorded on the M^{th} name card as a security number, wherein the value of M is greater than or equal to 1 but smaller than or equal to the total amount of the name cards included in the name card holder;
the security number acquisition module selects, from all the name cards included in the name card holder, M name cards and takes the one of the numbers recorded on the M name cards which is called most frequently as a security number, wherein the value of M is greater than or equal to 1 but smaller than or equal to the total amount of the name cards included in the name card holder;
the security number acquisition module selects, from all the name cards included in the name card holder, M name cards and takes the one of the numbers recorded on the M name cards which is called longest as a security number, wherein the value of M is greater than or equal to 1 but smaller than or equal to the total amount of the name cards included in the name card holder;
the security number acquisition module selects a specific group from the name card holder, selects, from the name cards included in the group, a number recorded on an optional name card or the N^{th} name card as a security number, or selects N name cards from all the name cards included in the group and takes the one of the numbers recorded on the N name cards which is called most frequently or longest as a security number, wherein the value of N is greater than or equal to 1 but smaller than or equal to the total amount of the name cards included in the group; and
the security number acquisition module selects one name card from the name card holder according to a preset keyword and takes the number recorded on the selected name card as a security number.

The security number acquisition module may acquire a security number from the call logs in at least one of the following ways:
the security number acquisition module randomly selects a number from the call logs as a security number;
the security number acquisition module selects the number of the last call from the call logs as a security number;
the security number acquisition module selects, from the call logs, K numbers and takes the one of the K numbers which is called most frequently as a security number, wherein the value of K is greater than or equal to 1 but smaller than or equal to the total amount of the numbers included in the call logs;
the security number acquisition module selects, from the call logs, K numbers and takes the one of the K numbers which is called longest as a security number, wherein the value of K is greater than or equal to 1 but smaller than or equal to the total amount of the numbers included in the call logs; and
the security number acquisition module selects a number from the call logs according to a preset keyword and takes the selected number as a security number.

The security number acquisition module may acquire a security number from the service record in at least one of the following ways:
the security number acquisition module randomly selects a number from the numbers recorded in the service record as a security number;
the security number acquisition module selects, from the numbers recorded in the service record, H numbers and takes the one of the H numbers which is called most frequently as a security number, wherein the value of H is greater than or equal to 1 but smaller than or equal to the total amount of the numbers recorded in the service record;
the security number acquisition module selects, from the numbers recorded in the service record, H numbers and takes the one of the H numbers which is called longest as a security number, wherein the value of H is greater than or equal to 1 but smaller than or equal to the total amount of the numbers recorded in the service record; and
the security number acquisition module selects the last one of the numbers added in the service record as a security number.

The name card holder, the call logs and the service record may have different priorities, the security number acquisition module may make a determination on whether to acquire a security number according to the priorities of the name card holder, the call logs and the service record and, after failing to acquire a security number from an acquisition source, may acquire a security number from an acquisition source with a lower priority.

When the security number acquisition module acquires a security number from the name card holder, the call logs or the service record in different ways, the different ways may be set with different priorities, and after failing to acquire a security number in one way, the security number acquisition module may acquire a security number in a way with a lower priority.

After failing to perform an alarming operation according to the security number, the anti-theft processing module may notify the security number acquisition module to acquire again a security number.

A mobile terminal includes: an anti-theft recognition module, a security number acquisition module and an anti-theft processing module.

The anti-theft recognition module determines whether or not the mobile terminal enters an anti-theft mode, if so, sends a security number acquisition instruction to the security number acquisition module.

After receiving the security number acquisition instruction, the security number acquisition module automatically acquires a security number and sends the acquired security number to the anti-theft processing module.

After receiving the security number, the anti-theft processing module gives an alarm according to the security number.

The mobile terminal may further include at least one of a name card holder module, a call recording module and a service recording module.

The name card holder module may be configured to set a name card holder for recording names.

The call recording module may be configured to record call logs of the mobile terminal.

The service recording module may be configured to record the services subscribed by the mobile terminal.

The security number acquisition module may acquire at least one security number from at least one of the name card holder, the call logs and the service record.

The security number acquisition module may acquire one security number from at least one of the name card holder, the call logs and the service record of the mobile terminal.

The security number acquisition module may acquire a security number from the name card holder in at least one of the following ways:
the security number acquisition module randomly selects, from the name card holder, the number recorded on a name card as a security number;
the security number acquisition module selects, from all the name cards included in the name card holder, the number recorded on the M^{th} name card as a security number, wherein the value of M is greater than or equal to 1 but smaller than or equal to the total amount of the name cards included in the name card holder;
the security number acquisition module selects, from all the name cards included in the name card holder, M name cards and takes the one of the numbers recorded on the M name cards which is called most frequently as a security number, wherein the value of M is greater than or equal to 1 but smaller than or equal to the total amount of the name cards included in the name card holder;
the security number acquisition module selects, from all the name cards included in the name card holder, M name cards and takes the one of the numbers recorded on the M name cards which is called longest as a security number, wherein the value of M is greater than or equal to 1 but smaller than or equal to the total amount of the name cards included in the name card holder;
the security number acquisition module selects a specific group from the name card holder, and selects, from the name cards included in the group, the number recorded on an optional name card or on the N^{th} name card as a security number, or selects N name cards from all the name cards included in the group and takes the one of the numbers recorded on the N name cards which is called most frequently or longest as a security number, wherein the value of N is greater than or equal to 1 but smaller than or equal to the total amount of the name cards included in the group; and
the security number acquisition module selects one name card from the name card holder according to a preset keyword and takes the number recorded on the selected name card as a security number.

The security number acquisition module may acquire a security number from the call logs in at least one of the following ways:
the security number acquisition module randomly selects a number from the call logs as a security number;
the security number acquisition module selects the number of the last call from the call logs as a security number;
the security number acquisition module selects, from the call logs, K numbers and takes the one of the K numbers which is called most frequently as a security number, wherein the value of K is greater than or equal to 1 but smaller than or equal to the total amount of the numbers included in the call logs;
the security number acquisition module selects, from the call logs, K numbers and takes the one of the K numbers which is called longest as a security number, wherein the value of K is greater than or equal to 1 but smaller than or equal to the total amount of the numbers included in the call logs; and
the security number acquisition module selects a number from the call logs according to a preset keyword and takes the selected number as a security number.

The security number acquisition module may acquire a security number from the service record in at least one of the following ways:
the security number acquisition module randomly selects a number from the numbers recorded in the service record as a security number;
the security number acquisition module selects, from the numbers recorded in the service record, H numbers and takes the one of the H numbers which is called most frequently as a security number, wherein the value of H is greater than or equal to 1 but smaller than or equal to the total amount of the numbers recorded in the service record;
the security number acquisition module selects, from the numbers recorded in the service record, H numbers and takes the one of the H numbers which is called longest as a security number, wherein the value of H is greater than or equal to 1 but smaller than or equal to the total amount of the numbers recorded in the service record; and
the security number acquisition module selects the last one of the numbers added in the service record as a security number.

The name card holder, the call logs and the service record may have different priorities, the security number acquisition module may make a determination on whether to acquire a security number according to the priorities of the name card holder, the call logs and the service record and, after failing to acquire a security number from an acquisition source, may acquire a security number from an acquisition source with a lower priority.

The security number acquisition module may also acquire a security number from the name card holder, the call logs or the service record in different ways which are set with different priorities and, after failing to acquire a security number in one way, acquires a security number again in a way with a lower priority.

After failing to perform an alarming operation according to the security number, the anti-theft processing module may notify the security number acquisition module to acquire again a security number.

The disclosure has the following beneficial effects.

In the disclosure, the anti-theft recognition module of the mobile terminal determines whether or not the mobile terminal enters an anti-theft mode, that is, whether or not the mobile terminal is lost, if so, sends a security number acquisition instruction to a security number acquisition module. The security number acquisition module automatically acquires a security number according to the security number acquisition instruction and sends the acquired security number to an anti-theft processing module. The anti-theft processing module gives an alarm according to the received security number, for example, sends a short message to the user of the security number using the security number or calls the user of the security number using the security number so that the user of the security number can lock the lost mobile terminal after receiving the alarm, thereby helping the owner of the lost mobile terminal retrieve the mobile terminal or the information stored in the lost mobile terminal, minimizing the loss of the owner of the mobile terminal and eliminating the potential safety hazard brought by the loss of the personal information stored in the mobile terminal.

Besides, the security number acquisition module automatically starts up to automatically acquire a security number without requiring a complicated manual setting after the anti-theft recognition module determines that the mobile terminal enters an anti-theft mode, thus avoiding the situation that no alarm is given after the mobile terminal is lost as the user forgets to set an alarming function or makes an error in setting the alarming function and consequentially improving user experience and anti-theft security.

Further, in the disclosure, as a security number is acquired automatically but not fixedly and manually set, the problem is avoided that the giving of an alarm is failed as a manually set fixed number is out of service for an overdue bill or is not used any more, thus further improving user experience and anti-theft security

### BRIEF DESCRIPTION OF THE DRAWINGS

Fig. 1 is a schematic diagram 1 illustrating the structure of a mobile terminal according to an embodiment of the disclosure;
Fig. 2 is a schematic diagram 2 illustrating the structure of a mobile terminal according to an embodiment of the disclosure;
Fig. 3 is a schematic diagram illustrating name card holder according to an embodiment of the disclosure;
Fig. 4 is a schematic diagram illustrating call logs according to an embodiment of the disclosure;
Fig. 5 is a schematic diagram illustrating the flow of an anti-theft method for a mobile terminal according to an embodiment of the disclosure; and
Fig. 6 is a schematic diagram illustrating the setting of priorities according to an embodiment of the disclosure.

### DETAILED DESCRIPTION

In the disclosure, the mobile terminal enters an anti-theft mode after it is determined that the mobile terminal is lost, a security number acquisition module is started up to acquire a security number automatically, the anti-theft processing module gives a corresponding alarm according to the acquired security number, for example, sends a text message to a user using the security number or calls the user using the security number, so that the user using the security number can locate the lost mobile terminal after receiving the alarm, thereby helping the owner of the mobile terminal retrieve the mobile terminal or the information stored in the mobile terminal, minimizing the loss of the owner of the mobile terminal and eliminating the potential safety hazard brought by the loss of the personal information stored in the mobile terminal. Moreover, the security number acquisition module is automatically enabled to automatically acquire a security number without requiring a complicated manual setting after the anti-theft recognition module determines that the mobile terminal enters an anti-theft mode, thus avoiding the situation that no alarm is given after the mobile terminal is lost as the owner forgets to set an alarming function or makes an error in setting the alarming function, and consequentially improving user experience and anti-theft security. Moreover, the problem is also avoided that the giving of an alarm is failed as a manually set fixed number is out of service for an overdue bill or is not used any more, thus further improving user experience and anti-theft security. The disclosure is described below in detail with reference to accompanying drawings when read in conjunction with embodiments.

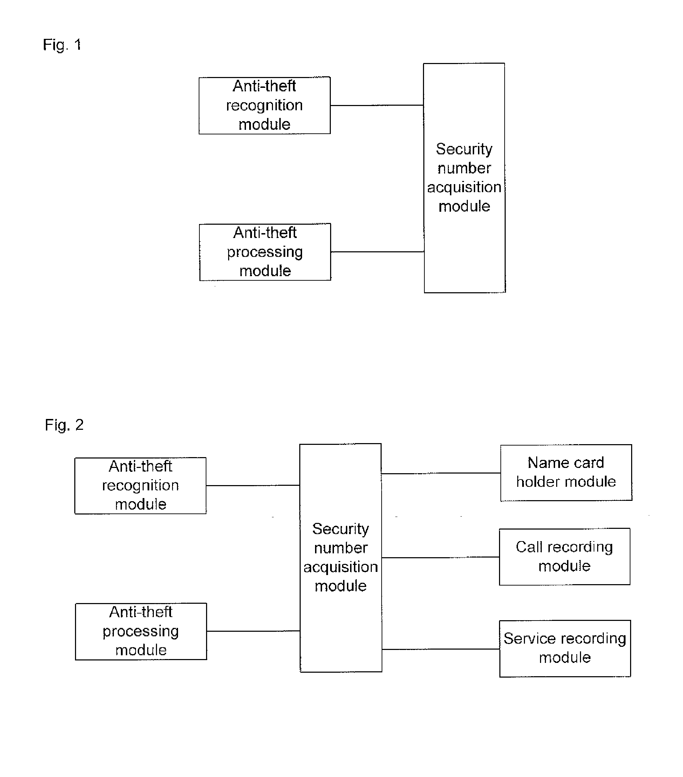

Refer to Fig. 1, the mobile terminal provided in the embodiment includes: an anti-theft recognition module, a security number acquisition module and an anti-theft processing module.

The anti-theft recognition module determines whether or not the mobile terminal enters an anti-theft mode, that is, whether or not the mobile terminal is lost. The anti-theft recognition module may determine whether or not the mobile terminal is lost in many ways, for example, by authenticating whether or not the current SIM card information or UIM card information is the same as that stored previously in a case where the mobile terminal is a mobile phone or a tablet computer communicating using an SIM card or a UIM card, or by authenticating related information of another user stored in the mobile terminal as long as a third party using the lost mobile terminal can be detected using the information. After detecting that the mobile terminal enters an anti-theft module, the anti-theft recognition module sends a security number acquisition instruction to the security number acquisition module. At the same time, the anti-theft recognition module may directly send an activation command to the anti-theft processing module to activate the anti-theft processing module, making the anti-theft processing module enter a working state. Alternatively, after receiving the security number sent from the security number acquisition module, the anti-theft processing module is activated automatically.

After receiving the security number acquisition instruction sent from the anti-theft recognition module, the security number acquisition module automatically acquires a security number in a way chosen after the specific functions achievable to the mobile terminal and the practicability of the mobile terminal are taken into consideration, and sends the acquired security number to the anti-theft processing module.

After receiving the security number from the security number acquisition module, the anti-theft processing module gives an alarm according to the security number. An alarm may be given in a plurality of ways, for example, by calling the owner of the security number or sending a notification message such as a text message or an email to the owner of the mobile terminal using the security number, so that the owner of the mobile terminal can locate the lost mobile terminal to retrieve the lost mobile terminal or relevant information stored in the lost mobile terminal, thereby minimizing the loss of the owner of the lost mobile terminal and eliminating the potential safety hazard caused by the loss of the stored personal information.

In the embodiment, the security number acquisition module starts up automatically after the anti-theft recognition module determines that the mobile terminal enters an anti-theft mode. The security number acquisition module automatically acquires a security number without requiring a complicated manual setting, thus avoiding the situation that no alarm is given after the mobile terminal is lost as the user forgets to set an alarming function or makes an error in setting the alarming function, and consequentially improving user experience and anti-theft security. Moreover, the problem is avoided that the giving of an alarm is failed as a manually set fixed number is out of service for an overdue bill or is not used any more, thus further improving user experience and anti-theft security.

Refer to Fig. 2, the mobile terminal further includes at least one of a name card holder module, a call recording module and a service recording module.

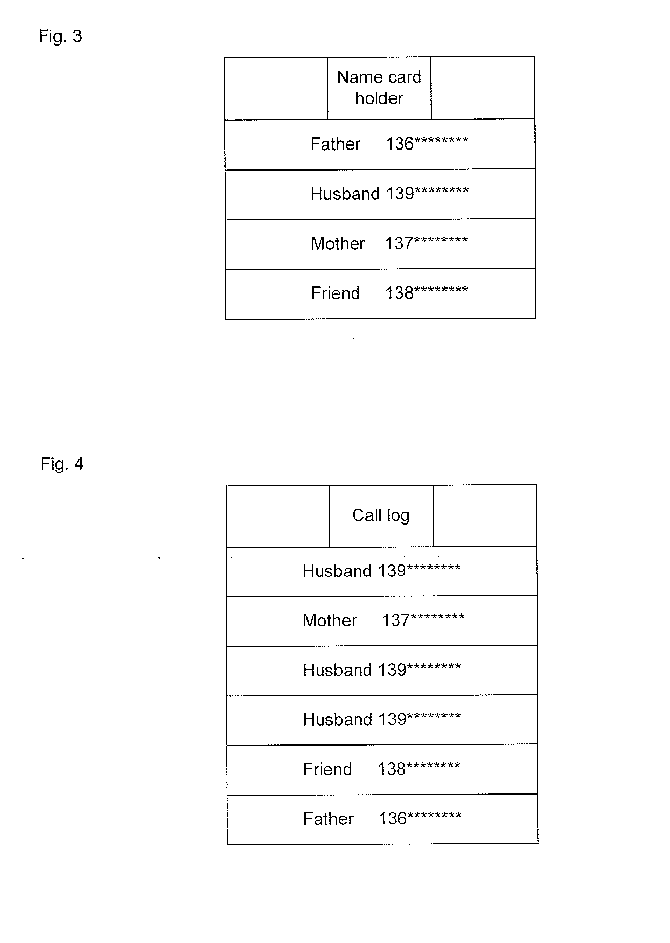

The name card holder module is configured to set a name card holder for recording name cards. The name card holder may be a telephone directory and the name card recorded in the name card holder may include a telephone number and other communication numbers. For example, the name card holder may be shown in Fig. 3.

The call recording module is configured to record call logs of the mobile terminal. The call logs may be sorted according to the call time, the call frequency or the call duration of each number. for example, the call logs may be shown in Fig. 4.

The service recording module is configured to record the services subscribed by the user of the mobile terminal. For example, the numbers set by the user as family numbers are recorded when the user subscribes a family number service or the numbers set by the user as short numbers are recorded when the user subscribes a short number service.

The security number acquisition module acquires at least one security number from at least one of the name card holder, the call logs and the service record. For example, the security number acquisition module may acquire one or more numbers from the name card holder, the call logs or the service record as security numbers and gives an alarm according to the one or more numbers acquired. Alternatively, the security number acquisition module may separately acquire a number from the name card holder, a number from the call logs and a number from the service record. The specific setting may be selectively made according to the actual situation. It should be noted that the number acquired in the embodiment as a security number may also be another communication number employed by the user, but not limited to a telephone number. The disclosure is further described below based on an example in which a security number is acquired by the security number acquisition module from at least one of the name card holder, the call logs and the service record.
1. When acquiring a security number from the name card holder, the security number acquisition module may acquire the security number in at least one of the following ways:
   A1: the security number acquisition module randomly selects, from the name card holder, a number recorded on a name card as a security number;
   A2: the security number acquisition module selects, from all the name cards included in the name card holder, a number recorded on the M^{th} name card as a security number, in which the value of M is greater than or equal to 1 but smaller than or equal to the total amount of the name cards included in the name card holder. Apparently, the value of M is an integer, preferably 1;
   A3: the security number acquisition module randomly selects or designates M name cards from all the name cards included in the name card holder, for example, designates the first M name cards included in the name card holder, and takes the one of the numbers recorded on the M name cards which is called most frequently as a security number. The value of M is greater than or equal to 1 but smaller than or equal to the total number of the name cards included in the name card holder. Apparently, the value of M is an integer, and the specific value of M is determined based on the amount of the name cards included in the name card holder or the sorting rule of the name cards.
   A4: the security number acquisition module randomly selects or designates M name cards from all the name cards included in the name card holder, for example, designates the first M name cards included in the name card holder, and takes the one of the numbers recorded on the M name cards which is called longest as a security number. The value of M is greater than or equal to 1 but smaller than or equal to the total number of the name cards included in the name card holder. Apparently, the value of M is an integer, and the specific value of M is determined based on the amount of the name cards included in the name card holder or the sorting rule of the name cards.
   A5: the security number acquisition module randomly selects or designates a specific group, for example, a family group or friend group, from the name card holder and selects, from all the name cards included in the group, the number recorded on an optional name card or on the N^{th} name card as a security number. Or, the security number acquisition module optionally selects or designates N name cards from all the name cards included in the group, for example, selects the first N name cards, and takes the one of the numbers recorded on the N name cards which is called most frequently or longest as a security number. The value of N is greater than or equal to 1 but smaller than or equal to the total amount of the name cards included in the group, and the specific value of N is determined according to the total number of the name cards included in the group or the sorting rule of each name card.
   A6: the security number acquisition module selects one name card from the name card holder according to a preset keyword and takes the number recorded on the selected name card as a security number.
2. When acquiring a security number from the call logs, the security number acquisition module may acquire the security number in at least one of the following ways.
   B1: the security number acquisition module randomly selects a number from the call logs as a security number.
   B2: the security number acquisition module selects the number of the last call (that is, the latest call) from the call logs as a security number.
   B3: the security number acquisition module selects, from the call logs, K numbers and takes the one of the K numbers which is called most frequently as a security number. The K numbers may be selected randomly or designated from the call logs, for example, the first K numbers in the call logs may be designated, and the value of K is greater than or equal to 1 but smaller than or equal to the total amount of the numbers included in the call logs.
   B4: the security number acquisition module selects, from the call logs, K numbers and takes the one of the K numbers which is called longest as a security number. The K numbers may be selected randomly or designated from the call logs, for example, the first K numbers in the call logs may be designated, and the value of K is greater than or equal to 1 but smaller than or equal to the total amount of the numbers included in the call logs.
   B5: the security number acquisition module selects a number from the call logs according to a preset keyword and takes the number as a security number.
3. When acquiring a security number from the service record, the security number acquisition module may acquire the security number in at least one of the following ways.
   C1: the security number acquisition module randomly selects a number from the numbers recorded in the service record as a security number.
   C2: the security number acquisition module selects, from the numbers recorded in the service record, H numbers and takes the one of the H numbers which is called most frequently as a security number. The H numbers may be selected randomly or designated, and the value of H is greater than or equal to 1 but smaller than or equal to the total amount of the numbers recorded in the service record.
   C3: the security number acquisition module selects, from the numbers recorded in the service record, H numbers and takes the one of the H numbers which is called longest as a security number. The H numbers may be selected randomly or designated, and the value of H is greater than or equal to 1 but smaller than or equal to the total amount of the numbers recorded in the service record.
   C4: the security number acquisition module selects the last one of the numbers added in the service record as a security number.

In the embodiment, in the case where the security number acquisition module acquires a number from more than one of the name card holder, the call logs and the service record, the name card holder, the call logs and the service record are set with different priorities. For example, it is set the priorities of the name card holder, the call logs and the service record are gradually lowered. The security number acquisition module makes a determination on where to acquire a security number according to the priorities of the name card holder, the call logs and the service record and, after failing to acquiring a security number from one of the name card holder, the call logs and the service record which has the highest priority, acquires a security number from the one with a lower priority. For example, the security number acquisition module first acquires a security number from the name card holder having the highest priority in at least one of the ways described above, if the acquisition of the security number is failed, the security number acquisition module acquires a security number from the call logs having the second highest priority in at least one of the ways described above, if the acquisition of the security number is still failed, the security number acquisition module acquires a security number from the service record having the lowest priority in at least one of the ways described above.

When the security number acquisition module acquires a security number from the name card holder, the call logs or the service record in many ways, the different ways may be set with different priorities. After failing to acquire a security number in one way with the highest priority, the security number acquisition module acquires a security number in a way with a lower priority. For example, when the security number acquisition module acquires a security number using the ways A1-A6, the ways A1-A6 may be set with gradually lowered priorities, and when acquiring a security number, the security number acquisition module first acquires a security number in the way A1 with the highest priority, if the acquisition is failed, the security number acquisition module acquires a security number again in the way A2 with a lower priority, and so on and so forth, until a security number is successfully acquired.

In the embodiment, to avoid the situation that the giving of an alarm by the anti-theft processing module of the mobile terminal is failed due to an external factor (e.g. communication environment, the out-of-service of a security number or the turnoff of the mobile terminal), the anti-theft processing module notifies the security number acquisition module to acquire a security number again after failing to give an alarm according to a security number received. After acquiring a new security number, the security number acquisition module sends the security number to the anti-theft processing module by performing the foregoing process, and the anti-theft processing module gives an alarm again. The process is cycled until an alarm is successfully given.

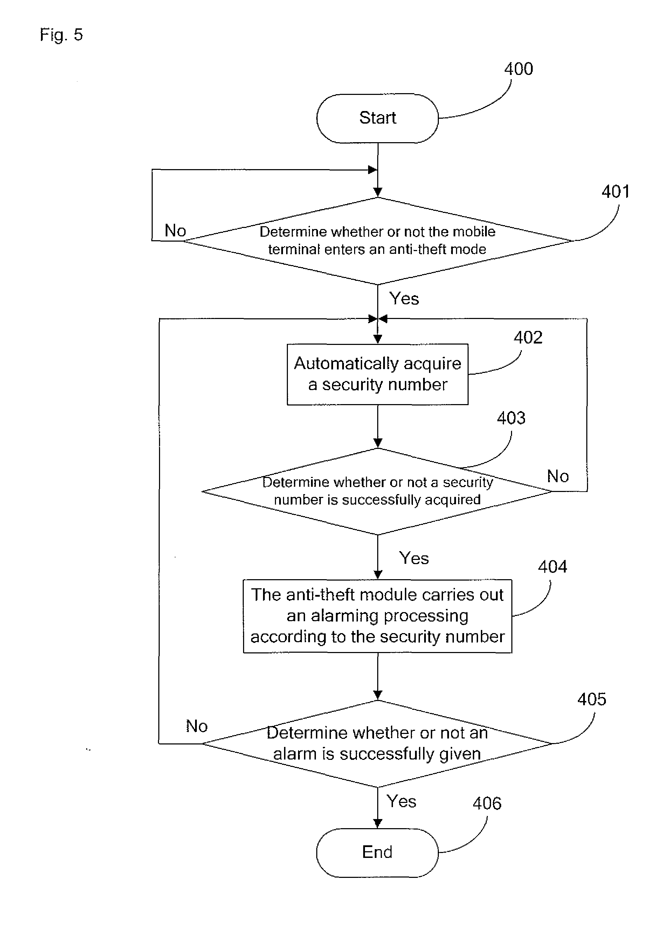

To be understood better, the disclosure is further described by taking a specific flow as an example, and refer to Fig. 5, the method includes the following steps.
Step 400: start;
Step 401: the anti-theft recognition module determines whether or not the mobile terminal enters an anti-theft mode, if so, sends a security number acquisition instruction to a security number acquisition module, otherwise, keeps determining whether or not the mobile terminal enters an anti-theft mode;
Step 402: the security number acquisition module automatically acquires a security number in the ways described above;
Step 403: the security number acquisition module determines whether or not a security number is succeeded successfully, if so, sends the successfully acquired security number to the anti-theft processing module and proceeds to execute Step 404, otherwise, returns to execute Step 402 to acquire a security number again;
Step 404: after receiving the security number, the anti-theft processing module gives an alarm according to the security number;
Step 405: the anti-theft processing module determines whether or not an alarm is successfully given, for example, the anti-theft processing module determines whether or not a call is successfully made if an alarm is given by calling the user of the security number or determines whether or not a short message is successfully sent if an alarm is given by sending a short message, proceeds to execute Step 406 if an alarm is successfully given, or returns to execute Step 402 to acquire a security number again if the giving of an alarm is failed;
Step 406: end.

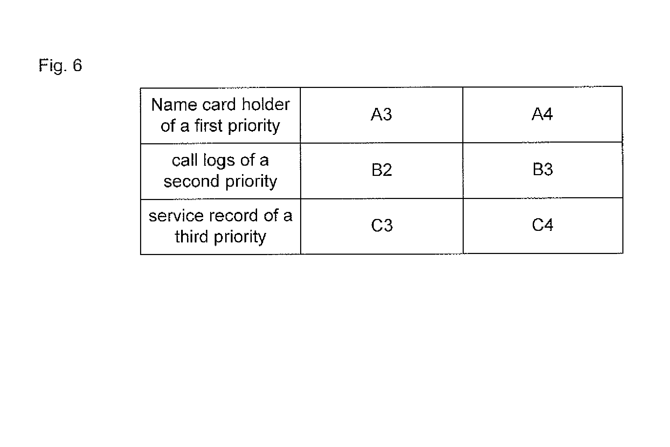

In a case where the name card holder, the call log and the service record are gradually reduced in priority, the security number acquisition module acquires a security number from at least one of the name card holder, the call logs and the service record as a security number according to priorities of the name card holder, the call logs and the service record. The security number acquisition module acquires a security number from the name card holder in the ways A3 and A4, from the call logs in the ways B2 and B3 and from the service record in the ways C3 and C4. The priority of A3 is higher than that of A4, the priority of B2 is higher than that of B3 and the priority of C3 is higher than that of C4. Refer to Fig. 6, the specific realization flow of the method is as follows.
Step 501: the anti-theft recognition module determines that the mobile terminal enters an anti-theft mode and sends a security number acquisition instruction to the security number acquisition module.
Step 502: after receiving the security number acquisition instruction, the security number acquisition module automatically acquires a security number, and specifically, this process is as follows:
   (1) first, the security number acquisition module acquires a security number from the name card holder having a first priority. As the priority of A3 is higher than that of A4, the security number acquisition module first acquires a security number from the name card holder in the way A3, if the acquisition is succeeded, the security number acquisition module sends the security number acquired in the way A3 to the anti-theft processing module and proceeds to execute Step 503, otherwise, the security number acquisition module acquires a security number in the way A4 and sequentially determines whether or not a security number is successfully acquired, if so, sends the security number acquired in the way A4 to the anti-theft processing module and proceeds to execute Step 503, otherwise (the acquisition will be failed if the name card holder is empty), proceeds to perform the following process (2);
   (2) the security number acquisition module acquires a security number from the call logs having a second priority lower than that of the name card holder. As the priority of B2 is higher than that of B3, the security number acquisition module first acquires a security number from the name card holder in the way B2, if the acquisition is succeeded, the security number acquisition module sends the security number acquired in the way B2 to the anti-theft processing module and proceeds to execute Step 503, otherwise, the security number acquisition module acquires a security number in the way B3 and sequentially determines whether or not a security number is successfully acquired, if so, sends the security number acquired in the way B3 to the anti-theft processing module and proceeds to execute Step 503, otherwise (the acquisition will be failed if the call logs is empty), proceeds to perform the following process (3);
   (3) the security number acquisition module acquires a security number from the service record having a third priority lower than that of the call logs. As the priority of C3 is higher than that of C4, the security number acquisition module first acquires a security number from the name card holder in the way C3, if the acquisition is succeeded, the security number acquisition module sends the security number acquired in the way C3 to the anti-theft processing module and proceeds to execute Step 503, otherwise, the security number acquisition module acquires a security number in the way C4 and sequentially determines whether or not a security number is successfully acquired, if so, sends the security number acquired in the way C4 to the anti-theft processing module and proceeds to execute Step 503, otherwise, proceeds to perform the process (1) to acquire a security number again according to the flow described above until a security number is successfully acquired.
Step 503: after receiving the security number, the anti-theft processing module gives an alarm according to the security number.
Step 504: the anti-theft processing module determines whether or not an alarm is successfully given, for example, determines whether or not a call is successfully made if an alarm is given by calling the user of the security number. For example, if a normally made call lasts more than 20 seconds, then the anti-theft processing module considers that an alarm is successfully given and ends the alarming flow, otherwise, considers that the calling is failed and returns to execute process (1) of Step 502 to acquire a security number again.

It can be seen from above that in the disclosure, the anti-theft recognition module of the mobile terminal determines whether or not the mobile terminal enters an anti-theft mode, that is, whether or not the mobile terminal is lost. If so, the anti-theft recognition module sends a security number acquisition instruction to the security number acquisition module, the security number acquisition module automatically acquires a security number according to the security number acquisition instruction and sends the acquired security number to the anti-theft processing module. The anti-theft processing module gives an alarm according to the received security number, for example, sends a short message to the user of the security number using the security number or calls the user of the security number using the security number so that the user of the security number can lock the lost mobile terminal after receiving the alarm, thereby helping the owner of the mobile terminal retrieve the mobile terminal or the information stored in the mobile terminal, minimizing the loss of the owner of the mobile terminal and eliminating the potential safety hazard brought by the loss of the personal information stored in the mobile terminal. Moreover, the security number acquisition module automatically starts up to automatically acquire a security number without requiring a complicated manual setting after the anti-theft recognition module determines that the mobile terminal enters an anti-theft mode, thus avoiding the situation that no alarm is given after the mobile terminal is lost as the user forgets to set an alarming function or makes an error in setting the alarming function and consequentially improving user experience and anti-theft security.

Further, in the disclosure, as a security number is acquired at least from one of the name card holder, the call logs and the service record in one of the ways described above but not manually and fixedly set, the problem is avoided that the giving of an alarm is failed as a manually set fixed number is out of service for an overdue bill or is not used any more, thus further improving user experience and anti-theft security.

The mentioned above is merely preferred embodiments of the disclosure but is not to be construed as limitation to the scope of protection of the disclosure.

## Claims

1. An anti-theft method for a mobile terminal, comprising:
determining, by an anti-theft recognition module, whether or not the mobile terminal enters an anti-theft mode, and sending a security number acquisition instruction to a security number acquisition module in the case the mobile terminal enters an anti-theft mode;
after the security number acquisition instruction is received by the security number acquisition module, automatically acquiring, by the security number acquisition module, a security number and sending, by the security number acquisition module, the acquired security number to an anti-theft processing module; and
after the security number is received, giving, by the anti-theft processing module, an alarm according to the security number.

2. The method according to claim 1, wherein the security number acquisition module automatically acquires at least one security number from at least one of a name card holder, call logs and a service record in the mobile terminal.

3. The method according to claim 2, wherein the security number acquisition module automatically acquires one security number from at least one of the name card holder, the call logs and the service record in the mobile terminal.

4. The method according to claim 3, wherein the security number acquisition module acquires a security number from the name card holder in at least one of the following ways:
the security number acquisition module randomly selects, from the name card holder, a number recorded on a name card as a security number;
the security number acquisition module selects, from all the name cards included in the name card holder, a number recorded on the M^{th} name card as a security number, wherein the value of M is greater than or equal to 1 but smaller than or equal to the total amount of the name cards included in the name card holder;
the security number acquisition module selects, from all the name cards included in the name card holder, M name cards and takes one of the numbers recorded on the M name cards which is called most frequently as a security number, wherein the value of M is greater than or equal to 1 but smaller than or equal to the total amount of the name cards included in the name card holder;
the security number acquisition module selects, from all the name cards included in the name card holder, M name cards and takes one of the numbers recorded on the M name cards which is called longest as a security number, wherein the value of M is greater than or equal to 1 but smaller than or equal to the total amount of the name cards included in the name card holder;
the security number acquisition module selects a group from the name card holder and selects, from all the name cards included in the group, a number recorded on an optional name card or the N^{th} name card as a security number, or selects N name cards from all the name cards included in the group and takes one of the numbers recorded on the N name cards which is called most frequently or longest as a security number, wherein the value of N is greater than or equal to 1 but smaller than or equal to the total amount of the name cards included in the group; and
the security number acquisition module selects one name card from the name card holder according to a preset keyword and takes a number recorded on the selected name card as a security number.

5. The method according to claim 3, wherein the security number acquisition module acquires a security number from the call logs in at least one of the following ways:
the security number acquisition module randomly selects a number from the call logs as a security number;
the security number acquisition module selects a number of the last call from the call logs as a security number;
the security number acquisition module selects, from the call logs, K numbers and takes one of the K numbers which is called most frequently as a security number, wherein the value of K is greater than or equal to 1 but smaller than or equal to the total amount of the numbers included in the call logs;
the security number acquisition module selects, from the call logs, K numbers and takes one of the K numbers which is called longest as a security number, wherein the value of K is greater than or equal to 1 but smaller than or equal to the total amount of the numbers included in the call logs; and
the security number acquisition module selects a number from the call logs according to a preset keyword and takes the selected number as a security number.

6. The method according to claim 3, wherein the security number acquisition module acquires a security number from the service record in at least one of the following ways:
the security number acquisition module randomly selects a number from numbers recorded in the service record as a security number;
the security number acquisition module selects, from numbers recorded in the service record, H numbers and takes one of the H numbers which is called most frequently as a security number, wherein the value of H is greater than or equal to 1 but smaller than or equal to the total amount of the numbers recorded in the service record;
the security number acquisition module selects, from numbers recorded in the service record, H numbers and takes one of the H numbers which is called longest as a security number, wherein the value of H is greater than or equal to 1 but smaller than or equal to the total amount of the numbers recorded in the service record; and
the security number acquisition module selects a last one of numbers added in the service record as a security number.

7. The method according to any one of claims 2 to 6, wherein the name card holder, the call logs and the service record have different priorities, the security number acquisition module makes a determination on whether to acquire a security number according to the priorities of the name card holder, the call logs and the service record and, after failing to acquire a security number from an acquisition source, acquires a security number from an acquisition source with a lower priority.

8. The method according to any one of claims 2 to 6, wherein when the security number acquisition module acquires a security number from the name card holder, the call logs or the service record in different ways, the different ways are set with different priorities, and after failing to acquire a security number in one way, the security number acquisition module acquires a security number in a way with a lower priority.

9. The method according to any one of claims 1 to 6, wherein after failing to perform an alarming operation according to the security number, the anti-theft processing module notifies the security number acquisition module to acquire again a security number.

10. A mobile terminal, comprising: an anti-theft recognition module, a security number acquisition module and an anti-theft processing module,
wherein the anti-theft recognition module is configured to determine whether or not the mobile terminal enters an anti-theft mode, and send a security number acquisition instruction to the security number acquisition module in the case the mobile terminal enters an anti-theft mode,
wherein the security number acquisition module is configured to automatically acquires, after receiving the security number acquisition instruction, a security number and sends the acquired security number to the anti-theft processing module, and
wherein the anti-theft processing module is configured to give, after receiving the security number, an alarm according to the security number.

11. The mobile terminal according to claim 10, further comprising: at least one of a name card holder module, a call recording module and a service recording module,
wherein the name card holder module is configured to set a name card holder for recording names,
wherein the call recording module is configured to record call logs of the mobile terminal,
wherein the service recording module is configured to record services subscribed by the mobile terminal, and
wherein the security number acquisition module is configured to acquire at least one security number from at least one of the name card holder, the call logs and the service record.

12. The mobile terminal according to claim 11, wherein the security number acquisition module is configured to acquire one security number from at least one of the name card holder, the call logs and the service record of the mobile terminal.

13. The mobile terminal according to claim 12, wherein the security number acquisition module acquires a security number from the name card holder in at least one of the following ways:
the security number acquisition module randomly selects, from the name card holder, a number recorded on a name card as a security number;
the security number acquisition module selects, from all the name cards included in the name card holder, a number recorded on the M^{th} name card as a security number, wherein the value of M is greater than or equal to 1 but smaller than or equal to the total amount of the name cards included in the name card holder;
the security number acquisition module selects, from all the name cards included in the name card holder, M name cards and takes one of the numbers recorded on the M name cards which is called most frequently as a security number, wherein the value of M is greater than or equal to 1 but smaller than or equal to the total amount of the name cards included in the name card holder;
the security number acquisition module selects, from all the name cards included in the name card holder, M name cards and takes the one of the numbers recorded on the M name cards which is called longest as a security number, wherein the value of M is greater than or equal to 1 but smaller than or equal to the total amount of the name cards included in the name card holder;
the security number acquisition module selects a group from the name card holder, and selects, from the name cards included in the group, a number recorded on an optional name card or on the N^{th} name card as a security number, or selects N name cards from all the name cards included in the group and takes one of the numbers recorded on the N name cards which is called most frequently or longest as a security number, wherein the value of N is greater than or equal to 1 but smaller than or equal to the total amount of the name cards included in the group; and
the security number acquisition module selects one name card from the name card holder according to a preset keyword and takes a number recorded on the selected name card as a security number.

14. The mobile terminal according to claim 12, wherein the security number acquisition module acquires a security number from the call logs in at least one of the following ways:
the security number acquisition module randomly selects a number from the call logs as a security number;
the security number acquisition module selects the number of the last call from the call logs as a security number;
the security number acquisition module selects, from the call logs, K numbers and takes one of the K numbers which is called most frequently as a security number, wherein the value of K is greater than or equal to 1 but smaller than or equal to the total amount of the numbers included in the call logs;
the security number acquisition module selects, from the call logs, K numbers and takes one of the K numbers which is called longest as a security number, wherein the value of K is greater than or equal to 1 but smaller than or equal to the total amount of the numbers included in the call logs; and
the security number acquisition module selects a number from the call logs according to a preset keyword and takes the selected number as a security number.

15. The mobile terminal according to claim 12, wherein the security number acquisition module acquires a security number from the service record in at least one of the following ways:
the security number acquisition module randomly selects a number from numbers recorded in the service record as a security number;
the security number acquisition module selects, from numbers recorded in the service record, H numbers and takes one of the H numbers which is called most frequently as a security number, wherein the value of H is greater than or equal to 1 but smaller than or equal to the total amount of the numbers recorded in the service record;
the security number acquisition module selects, from numbers recorded in the service record, H numbers and takes one of the H numbers which is called longest as a security number, wherein the value of H is greater than or equal to 1 but smaller than or equal to the total amount of the numbers recorded in the service record; and
the security number acquisition module selects a last one of numbers added in the service record as a security number.

16. The mobile terminal according to any one of claims 11 to 15, wherein the name card holder, the call logs and the service record have different priorities, and the security number acquisition module makes a determination on whether to acquire a security number according to the priorities of the name card holder, the call logs and the service record and, after failing to acquire a security number from an acquisition source, acquires a security number from an acquisition source with a lower priority.

17. The mobile terminal according to any one of claims 11 to 15, wherein the security number acquisition module acquires a security number from the name card holder, the call logs or the service record in different ways which are set with different priorities, and after failing to acquire a security number in one way, the security number acquisition module acquires a security number in a way with a lower in priority.

18. The mobile terminal according to any one of claims 10 to 15, wherein after failing to perform an alarming operation according to the security number, the anti-theft processing module notifies the security number acquisition module to acquire again a security number.
